# EUROPÄISCHE PATENTSCHRIFT

(11) **EP 2 734 406 B1**
(45) Veröffentlichungstag und Bekanntmachung des Hinweises auf die Patenterteilung: **21.10.2015**
(21) Anmeldenummer: 12733744.2
(22) Anmeldetag: 12.07.2012
(51) Int. Cl.: B60N 2/02, B60N 2/44, B60N 2/16

(54) **VERSTELLVORRICHTUNG FÜR EINEN KRAFTFAHRZEUGSITZ MIT MINDESTENS EINEM ANSCHLAG**
ADJUSTING DEVICE FOR A MOTOR VEHICLE SEAT, COMPRISING AT LEAST ONE STOP
DISPOSITIF DE RÉGLAGE POUR UN SIÈGE DE VÉHICULE À MOTEUR COMPORTANT AU MOINS UNE BUTÉE

(30) Priorität: 20.07.2011 DE 102011079497
(43) Veröffentlichungstag der Anmeldung: 28.05.2014
(73) Patentinhaber: Johnson Controls Metals and Mechanisms GmbH & Co. KG, 42699 Solingen (DE)
(72) Erfinder: KARTHAUS, Ulrich, 42899 Remscheid (DE)
(74) Vertreter: Bauer, Wulf
(86) Internationale Anmeldenummer: PCT/EP2012/063631
(87) Internationale Veröffentlichungsnummer: WO 2013/010892

(56) Entgegenhaltungen:
- WO-A1-98/25791
- DE-A1- 1 925 778
- DE-A1- 3 616 290
- DE-A1- 4 108 955
- DE-A1- 4 400 910
- DE-A1-102011 051 988
- DE-C1- 19 705 485
- JP-A- 2011 106 535
- US-A- 4 884 844

## Beschreibung

Die Erfindung bezieht sich auf eine Verstellvorrichtung für einen Drehgelenkbeschlag eines Kraftfahrzeugsitzes nach dem Oberbegriff des Patentanspruchs 1.

Eine derartige Verstellvorrichtung ist aus der DE 41 08 955 A1 bekannt.

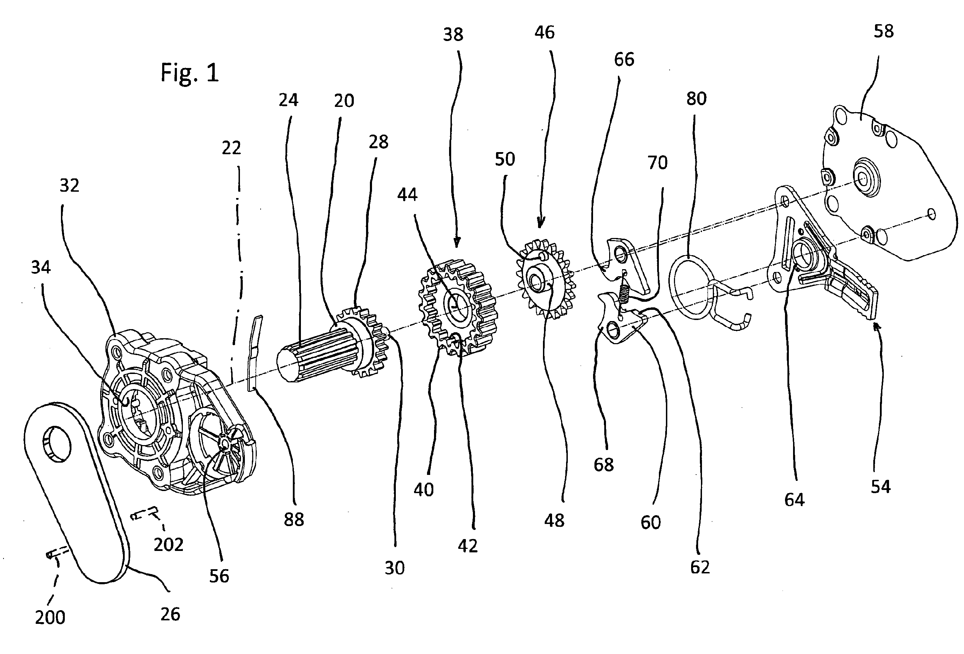

Wird eine derartige Verstelleinrichtung nicht eingesetzt, sind dem zu verstellenden Element des Kraftfahrzeugsitzes, beispielsweise einer Schwinge für eine Höhenverstellung der Sitzvorderkante, in der Regel Anschläge zugeordnet. Sie begrenzen den Bereich, in dem das zu verstellende Element bewegt werden kann. Insbesondere begrenzen sie den Bereich, in dem das Element verschwenkt werden kann. Derartige Anschläge, wie sie aus dem Stand der Technik bekannt sind, sind in Figur 1 mit den Bezugszeichen 200 und 202 eingezeichnet. Sie begrenzen den möglichen Schwenkweg der Schwinge 26, die das zu verstellende Element bildet.

Ein derartiger, am zu verstellenden Element selbst wirkender Anschlag hat Nachteile. Wenn die Verstellvorrichtung über ihre Antriebseinheit so weit bewegt wird, dass das Element an einen der Anschläge kommt, führt jedes weitere, in die Antriebseinheit eingeleitete Drehmoment dazu, dass die Antriebseinheit, die Getriebeeinheit und die sonstigen Teile belastet werden. Bei einer Getriebeeinheit, die ein selbsthemmendes Getriebe, beispielsweise ein Taumelgetriebe oder ein Getriebe mit Schnecke und Schneckenrad aufweist, führt die Belastung zu einem Verspannen des Getriebes. Man spricht auch von einem "Aufziehen" des Getriebes. Je höher die Drehmomente sind, die in die Antriebseinheit eingeleitet werden, umso stärker wird das Getriebe belastet und kommt mehr und mehr in einen verspannten bzw. klemmenden Zustand. Aus diesem Zustand lässt es sich später unter Bewegungsumkehr nur noch unter Geräuschbildung, zumeist mit einem Knacken, heraus bewegen. Bei Bewegungsumkehr kommt es zu einem Losbrechen. Dies alles ist nachteilig.

Bei der Verstellvorrichtung der eingangs genannten Art ist das Anschlagmittel zwischen dem Ringrad, in der DE 41 08 955 A1 als Inrad bezeichnet, und einem Gehäuseteil, in der DE 41 08 955 A1 als Abdeckplatte bezeichnet, angeordnet. Dadurch wird nicht verhindert, dass sich das Exzentergetriebe verspannen oder verklemmen kann.

Ausgehend von der Verstellvorrichtung der eingangs genannten Art hat sich die Erfindung die Aufgabe gestellt, eine verbesserte Position des Anschlagmittels für eine Verstellvorrichtung der eingangs genannten Art anzugeben. Es soll ein Verspannen bzw. Aufziehen des Getriebes besser vermieden werden.

Diese Aufgabe wird von einer Verstellvorrichtung mit den Merkmalen des Patentanspruchs 1 gelöst.

Erfindungsgemäß ist das Anschlagmittel zwischen dem Stellrad und dem Ringrad angeordnet, dabei ist der erste Anschlag an dem Stellrad angeordnet, der erste Gegenanschlag ist an dem Ringrad angeordnet. Man erhält eine präzisere Positionierung.

Darüber hinaus ist es nun nicht mehr möglich, das selbsthemmende Getriebe zu verspannen. Bevor ein Verspannen auftritt, wird der Antrieb des selbsthemmenden Getriebes blockiert. Dies geschieht durch Anschlagmittel, die dann ein Weiterdrehen des selbsthemmenden Getriebes unterbinden, wenn sich das zu verstellende Element in einem der Endbereiche seines Schwenkweges befindet. Wenn der erfindungsgemäße Anschlag erreicht ist und ein Benutzer die Antriebseinheit noch weiter bewegt, spürt er einen präzisen Anschlag, der nicht durch die elastischen Eigenschaften des Getriebes beeinflusst ist. Dem Nutzer wird also eine klare, haptische Rückmeldung gegeben, dass nun der Anschlag erreicht ist. Dies ist beim Stand der Technik anders, denn dort spielt noch die Elastizität des selbsthemmenden Getriebes eine Rolle, die zu einem nicht so deutlich spürbaren Anschlagverhalten führt.

In vorteilhafter Weiterbildung ist die Antriebseinheit als manuell betätigbarer Drehknopf ausgeführt, dem vorzugsweise ein Untersetzungsgetriebe zugeordnet ist. Alternativ ist sie als Schrittschaltwerk mit einem manuell betätigbaren Hebel ausgeführt. Sie kann auch einen Elektromotor aufweisen. Im letzteren Fall ist die Ausgangswelle des Elektromotors vorzugsweise mit einer Schnecke verbunden, die mit einem Schneckenrad in Eingriff ist, das von einem Stellrad ausgebildet ist.

Die Anschlagmittel können beliebig ausgeführt sein. In der nachfolgenden Beschreibung ist ein Anschlag des Anschlagmittels als Stift ausgeführt. Eine derartige Ausführung ist nicht einschränkend zu verstehen, andere Möglichkeiten, den Anschlag des Anschlagmittels auszubilden, sind dem Fachmann geläufig. In der nachfolgenden Beschreibung bildet ein einziger Stift mit zwei gegenüberliegenden Flächen jeweils einen Anschlag in beiden Schwenkrichtungen. Diese beiden Flächen können in einer Alternative auch an zwei Bauteilen, die nicht die Form eines Stiftes haben müssen, ausgebildet sein. Ebenso kann der mit dem Anschlag zusammenwirkende Gegenanschlag vom Fachmann in weiten Bereichen verändert und anders gestaltet werden. Auch hier sind die dargestellten Gegenanschläge lediglich als ein hinweisendes Beispiel zu verstehen. Das Anschlagmittel bildet mindestens einen Anschlag aus.

Weitere Vorteile und Merkmale der Erfindung ergeben sich aus den übrigen Ansprüchen sowie der folgenden Beschreibung von vier nicht einschränkend zu verstehenden Ausführungsbeispielen der Erfindung, die unter Bezugnahme auf die Zeichnungen im Folgenden näher erläutert werden. In dieser Zeichnung zeigen:
- Fig. 1:: ein perspektivisches Montagebild einer Verstellvorrichtung einschließlich einer Schwinge des Kraftfahrzeugsitzes,

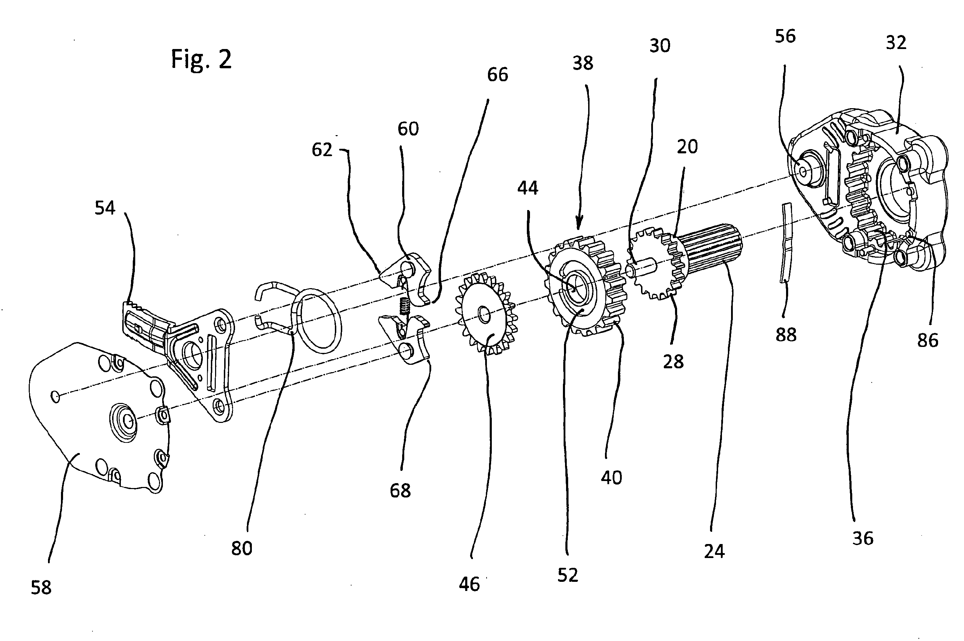

- Fig. 2:: die Verstellvorrichtung nach Fig. 1 als Montagebild, jedoch nun in einer anderen Blickrichtung gesehen, ohne Schwinge,

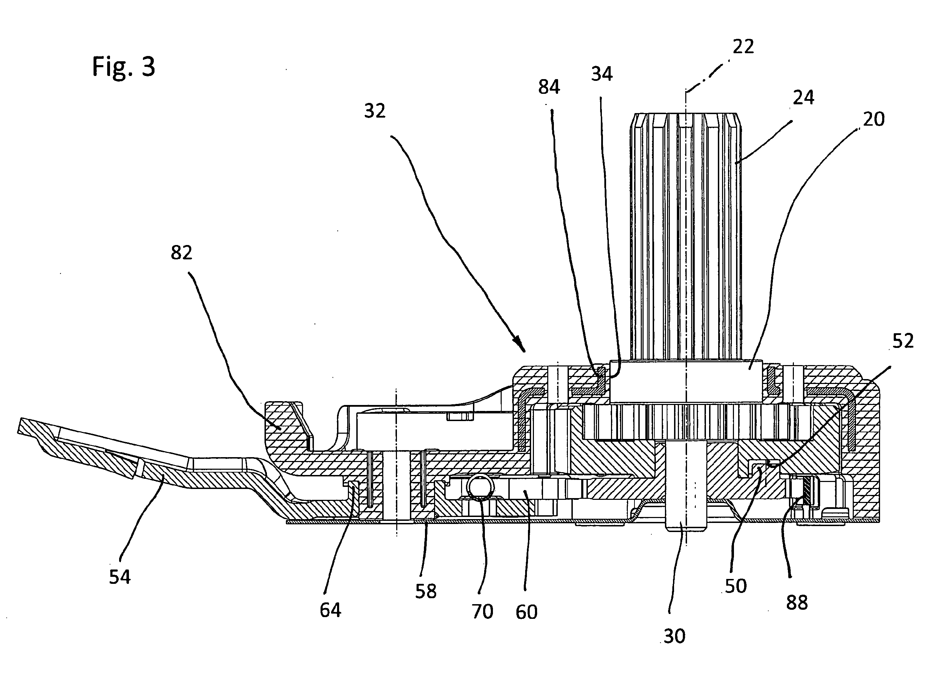

- Fig. 3:: einen Schnitt durch die montierte Verstellvorrichtung nach Fig. 2 entlang der Schnittebene, die durch eine Achse der Ausgangswelle und eine Handhebelachse des Handhebels bestimmt ist,
- Fig. 4:: ein perspektivisches Montagebild einer zweiten Ausführung mit Handrad,
- Fig. 5:: ein perspektivisches Montagebild der zweiten Ausführung, gesehen in einer anderen Blickrichtung,
- Fig. 6:: eine Ansicht im Sinne der Pfeile VI-VI in Fig. 5,
- Fig. 7:: ein perspektivisches Montagebild einer Verstellvorrichtung ähnlich Fig. 1, jedoch mit Bewegungsumkehr
- Fig. 8:: ein perspektivisches Montagebild einer dritten Ausführung mit Elektromotor,
- Fig. 9:: ein perspektivisches Montagebild der dritten Ausführung, gesehen in einer anderen Blickrichtung, und
- Fig. 10:: ein perspektivisches Montagebild einer Verstellvorrichtung ähnlich Fig. 7, jedoch mit einem anderen Anschlagmittel.

Die Verstellvorrichtung hat eine Ausgangswelle 20, die um eine Achse 22 rotiert. Die Ausgangswelle 20 hat eine unrunde Aufnahme 24 für eine Schwinge 26. Die Winkellage dieser Schwinge 26 wird durch die Verstellvorrichtung verstellt, die Schwinge 26 ist beispielsweise einer Verstellvorrichtung für die Höhe der Sitzvorderkante oder einer anderen Verstellvorrichtung eines Kraftfahrzeugsitzes (nicht dargestellt) zugeordnet. Die dargestellte Schwinge 26 ist ein Beispiel für ein zu verstellendes Element des Kraftfahrzeugsitzes.

Mit der Ausgangswelle 20 ist ein Außenzahnrad 28 verbunden. Weiterhin ist ein Lagerbolzen 30 vorgesehen, der zentrisch zur Achse 22 ist und sich beispielsweise in einer Bohrung der Ausgangswelle 20 befindet oder einstückig mit dieser Ausgangswelle 20 ist.

Die Ausgangswelle 20 ist in einem Gehäuseteil 32 drehbar gelagert, präziser gesagt ist sie in einer Lagerbohrung 34 drehbar gelagert. Die Lagerbohrung 34 ist zentrisch zur Achse 22. Das Gehäuseteil 32 bildet eine Innenverzahnung 36 aus, sie ist zentrisch zur Achse 22.

Es ist ein Ringrad 38 vorgesehen, das einen Außenzahnring 40 und einen hierzu konzentrischen Innenzahnring 42 aufweist. Das Ringrad 38 hat weiterhin eine Ringbohrung 44. Außenzahnring 40, Innenzahnring 42 und Ringbohrung 44 sind zentrisch zu einer Achse, die parallel zur Achse 22 ist und gegenüber dieser um ein Maß der Exzentrizität e parallel verschoben ist. Der Außenzahnring 40 ist in taumelndem Eingriff mit der Innenverzahnung 36. Ebenso ist das Außenzahnrad 28 in taumelndem Eingriff mit dem Innenzahnring 42. Innenverzahnung 36 und Außenzahnring 40 bilden eine erste Taumelstufe. Innenzahnring 42 und Außenzahnrad 28 bilden eine zweite Taumelstufe. Der Exzentrizität e beider Taumelstufen hat den gleichen Wert e. Die beiden Exzentrizitäten sind um 180° gegeneinander versetzt.

Es ist ein Stellrad 46 vorgesehen. Das Stellrad 46 hat eine Bohrung, die zentrisch zur Achse 22 ist. Um diese Bohrung herum erstreckt sich ein exzentrischer Ansatz 48. Er hat die Form eines Zylinders, die Zylinderachse ist um das Maß e gegenüber der Achse 22 versetzt. Der Zylinder ist so geformt, dass er die Ringbohrung 44 füllt und das Ringrad 38 um den Ansatz 48 drehbar ist. Die beschriebene zweifache Taumelstufe bildet die Getriebeeinheit. Konkret gehören zur Getriebeeinheit die Teile 28, 38 (mit 40, 42 und 44) und 48.

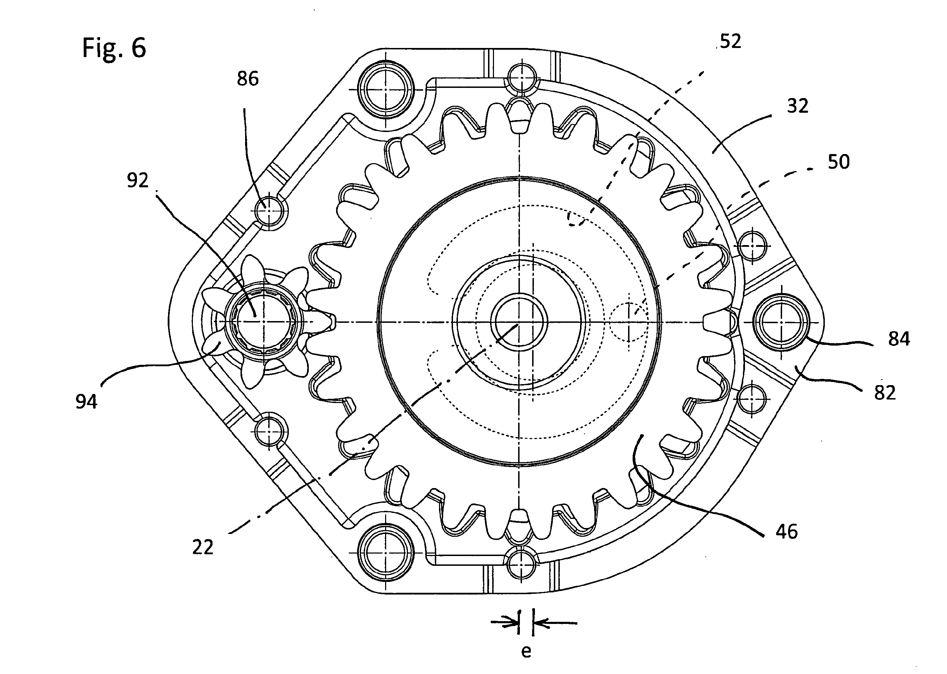

Zwischen dem Stellrad 46 und dem Ringrad 38 ist ein Anschlagmittel angeordnet. Es weist einen ersten Anschlag 50 auf, der als Stift 50 realisiert ist, der am Stellrad 46 versetzt zum Ansatz 48 und in gleicher Richtung wie dieser Ansatz 48 vorspringt. Der Stift 50 bildet einen Anschlag des Anschlagmittels. Der Stift 50 greift in ein erster Gegenanschlag 52, der als bogenförmige Nut 52 realisiert ist, die an der zugewandten Seitenfläche des Ringrades 38 ausgebildet ist. Diese Nut 52 erstreckt sich über nahezu 360°. Sie hat zwei Nutenden, die jeweils einen Gegenanschlag des Anschlagmittels bilden. Die Nut 52 ist zentrisch zur Zylinderachse, dies ist insbesondere aus Fig. 6 ersichtlich. Der Stift 50 bildet einen Anschlag für beide Schwenkrichtungen aus. Es ist auch möglich, getrennte Anschläge für die beiden Schwenkrichtungen vorzusehen. Demgemäß wird im ersten Ausführungsbeispiel das erste Anschlagmittel durch eine Fläche des Stifts 50 und ein Nutende der Nut 52. gebildet. Das zweite Anschlagmittel wird durch eine andere Fläche des Stifts 50 und das andere Nutende der Nut 52 gebildet.

Der exzentrische Ansatz 48 treibt das Ringrad 38 zu einer Taumelbewegung an. Solange der Stift 50 sich nicht an einem Ende der Nut 52 befindet, kann durch Drehen des Stellrades 46 der exzentrische Ansatz 48 in beiden Drehrichtungen bewegt werden. Wenn der Stift 50 in Anlage an ein Ende der Nut 52 gelangt, ist diese Antriebsbewegung in der betreffenden Drehrichtung beendet, eine Drehbewegung des Stellrades 46 ist nun nicht weiter möglich. Durch Zusammenwirken von Stift 50 und den Enden der Nut 52 werden die Endanschläge erhalten, die den Bewegungsbereich der Schwinge 26 bestimmen.

Nach dem Stand der Technik sind der Schwinge 26 gestellfeste, beispielsweise am Gehäuseteil 32 vorgesehene Anschläge 200, 202 zugeordnet, die den Bewegungsbereich der Schwinge 26 unmittelbar begrenzen. In Fig. 1 sind diese Anschläge 200, 202 gestrichelt dargestellt. Erfindungsgemäß sind derartige Anschläge 200, 202 am zu verstellenden Element nicht vorgesehen. Die Begrenzung des Schwenkweges der Schwinge 26 erfolgt durch das Anschlagmittel, also konkret im Ausführungsbeispiel durch das Zusammenwirken des Stiftes 50 und der Enden der Nut 52. Die Enden der Nut 52 werden so positioniert, dass der gewünschte Schwenkwinkel unter Berücksichtigung der Übersetzung der beiden Taumelstufen erreicht wird. Sind beispielsweise die Enden der Nut 52 in einem Abstand von 340° zueinander und ist das Übersetzungsverhältnis der beiden Taumelstufen 1:10, so ist der Schwenkwinkel der Schwinge 26 an den Stellen 0° und 34° begrenzt. Die Schwinge 26 kann nur über einen Winkelbereich von 34° bewegt werden. Anstelle von Stift 50 und Nut kann die Winkelbegrenzung auch durch andere Mittel erreicht werden.

Im ersten Ausführungsbeispiel erfolgt der Antrieb des Stellrades 46 und damit der beiden Taumelstufen durch ein Schrittschaltwerk. Dieses bildet die Antriebseinheit. Das Schrittschaltwerk hat einen Handhebel 54, der um ein Lagermittel 56 schwenkbar ist, das in Form eines Achsstummels am Gehäuseteil 32 vorspringt und eine abstützende Bohrung in einer Grundplatte 58 hat. Grundplatte 58 und Gehäuseteil 32 begrenzen einen Innenraum, in dem die bisher beschriebenen Teile, mit Ausnahme der Schwinge 26, angeordnet sind. Grundplatte 58 und Gehäuseteil 32 lassen einen seitlichen Schlitz frei, durch den ein Betätigungsarm des Handhebels 54 nach außen ragt.

Das Schrittschaltwerk hat weiterhin zwei Mitnehmer 60, die am Handhebel 54 um Mitnehmerachsen schwenkbar gelagert sind. Die Mitnehmerachsen und die Schwenkachse des Handhebels 54 liegen auf den Eckpunkten eines gleichschenkligen Dreiecks. Die Mitnehmer 60 haben drei Arme. Ein erster Arm jedes Mitnehmers 60 trägt einen Mitnehmerzahn 66. Dieser kommt gesteuert durch eine Kippbewegung des Handhebels 54 in Eingriff mit einer Radialverzahnung des Stellrades 46. Jeder einzelne Mitnehmerzahn 66 kann verstanden werden als ein Zahnrad, das um die Schwenkachse des Handhebels 54 dreht und in Eingriff mit der Radialverzahnung des Stellrades 46 kommt.

Ein zweiter Arm des Mitnehmers 60 trägt eine Nase 68. Diese Nase 68 bildet eine der Radialverzahnung zugewandte Fläche aus, diese Fläche kommt in Kontakt mit einer Zahnspitze der Verzahnung des Stellrades 46, wenn ein Antriebshub vollständig ist. Dadurch wird die maximale Schwenkbewegung des Handhebels 54 begrenzt. Ein dritter Arm bildet eine Anschlagfläche 62 aus. Diese ist normalerweise in Anlage an einem Bund 64 des Handhebels 54 oder, in einer anderen Ausführung, an einer Lagerwelle des Handhebels 54. Diese Lagerwelle ist zentrisch zur Hebelachse des Handhebels 54.

Die beiden Mitnehmer 60 sind spiegelbildlich zueinander angeordnet. Sie sind Gleichteile. Eine Zugfeder 70 greift mit ihren Enden an jedem Mitnehmer 60 an und zieht die Anschlagflächen 62 zueinander, so dass diese am Bund 64 anliegen. Zwischen dem Mitnehmerzahn 66 und der Nase 68 verläuft eine Verbindungslinie von Achse 22 und Mitnehmerachse des zugehörigen Mitnehmers 60. Zwischen dem ersten Arm und dem dritten Arm verläuft eine Verbindungslinie von Mitnehmerachse und Hebelachse des Handhebels 54.

Das Schrittschaltwerk hat eine Feder 80 für die Nulllage. Sie ist formmäßig dem Gehäuseteil 32 angepasst. Sie hat einen Ringbereich, der zentrisch zum Bund 64 ist und von dem zwei Arme zunächst radial und anschließend auch axial wegstehen. Diese Arme liegen beidseitig am Handhebel 54 an und halten ihn in der Nulllage. Die Arme liegen weiterhin an Taschen an, die im Gehäuseteil 32 ausgebildet sind. Zum Schrittschaltwerk gehört das Rad des Stellrades 46.

Das Gehäuseteil 32 ist als Hybridteil ausgeführt. Es ist im Wesentlichen aus Kunststoff hergestellt, es hat eine Kunststoffumspritzung 82. Diese umschließt einen Stahleinleger 84. Die Kunststoffumspritzung 82 ist einstückig. Sie bildet die Innenverzahnung 36 aus. Am Gehäuseteil 32 springen entlang eines Randes insgesamt vier kleine Montagestifte 86 vor, die in axial zurückgesetzten Buchten angeordnet sind, so dass sie insgesamt nicht vorstehen. Sie kooperieren mit Löchern in parallel in gleicher Richtung versetzten Bereichen, die in der Grundplatte 58 ausgebildet sind. Die Montagestifte 86 werden durch die Löcher gesteckt werden und festgelegt, z.B. durch Verformen. Dadurch ist das Gehäuse geschlossen und kann als fertiges Bauteil gehandhabt werden. Weiterhin sind vier Haltebereiche im Gehäuseteil 32 vorgesehen, die mit vier Bohrungen in der Grundplatte 58 korrespondieren. Sie werden durch den Stahleinleger 84 gebildet.

Es ist eine Blattfeder 88 vorgesehen, sie ist in Anlage am Stellrade 46. In einer Alternative ist sie in Anlage an einem anderen sich drehenden Teil, beispielsweise einem Außenzahnrad 28 oder einer Welle. Sie ist in eine entsprechende Tasche des Gehäuseteils 32 eingelegt. Sie bremst eine freie Drehbewegung und ist dadurch für den Rückhub von großem Vorteil, insbesondere bei der Schrittschaltvorrichtung. Vorzugsweise hat die Blattfeder 88 eine kleine Ausbuchtung, mit der sie zwischen Zähne des Stellrades 46 greift. Sie liegt den Mitnehmern 66 gegenüber.

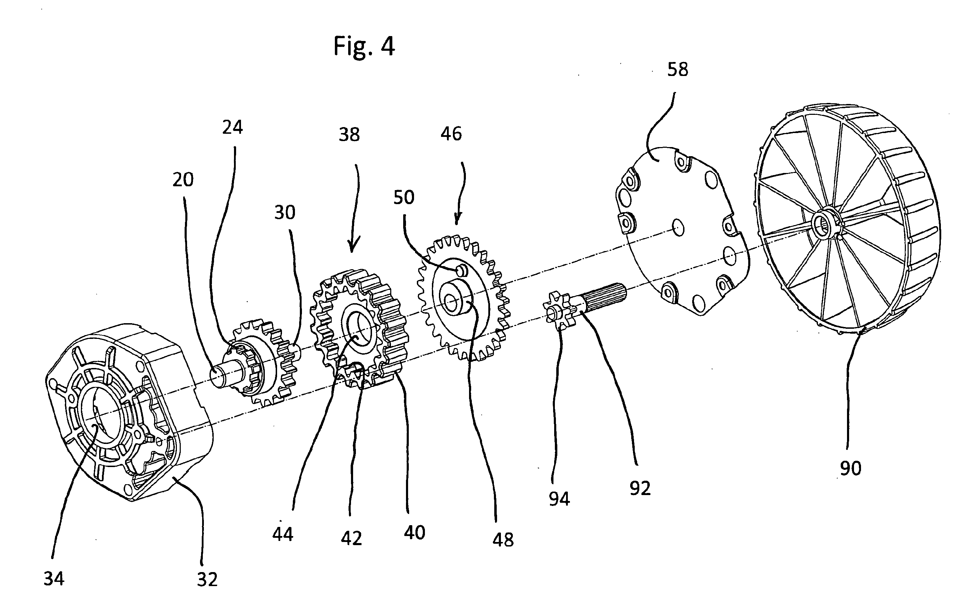

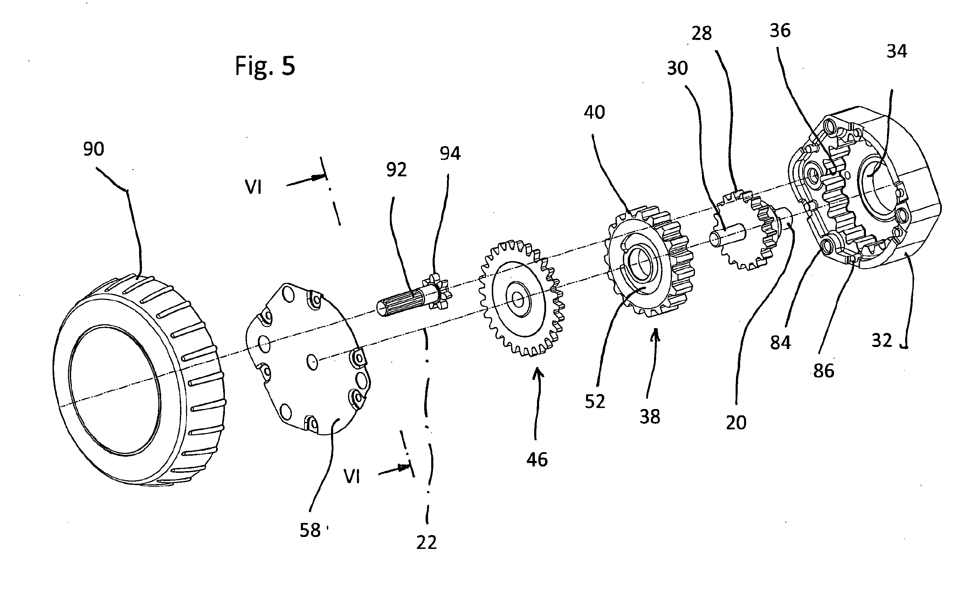

Das zweite Ausführungsbeispiel nach den Figuren 4 bis 6 unterscheidet sich vom ersten Ausführungsbeispiel im Wesentlichen durch die Ausbildung der manuellen Antriebseinheit. Verwendet wird nun ein Handrad 90 anstelle der Schrittschaltvorrichtung. Es ist um eine Handradwelle 92 drehbar gelagert, hierfür ist je eine Lagerbohrung 34 in der Grundplatte 58 und im Gehäuseteil 32 vorgesehen. Das Gehäuseteil 32 hat nun eine andere Form, es muss nicht mehr die Feder 80 und die Blattfeder 88 aufnehmen. Die Feder 80 und die Blattfeder 88 entfallen. Die Taumelstufen und insbesondere der Anschlag aus Stift 50 und Nut 52 sind ungeändert. Mit dem wiederum als Radialrad ausgebildeten Stellrad 46 ist ein Ritzel 94 im Eingriff, das mit der Handradwelle 92 drehverbunden ist. Ritzel 94 und Stellrad 46 bilden eine Untersetzungsstufe. Durch Drehen des Handrades 90 wird das Ritzel 94 gedreht, dieses wiederum treibt das Stellrad 46 zu einer Drehbewegung an. Zwischen Ritzel 94 und Stellrad 46 wird eine Übersetzung von 1:3 bis 1:4 erreicht. Insgesamt liegt zwischen dem Handrad 90 und dem zu betätigenden Element 26 eine Übersetzung von 1:25 bis 1:50 vor.

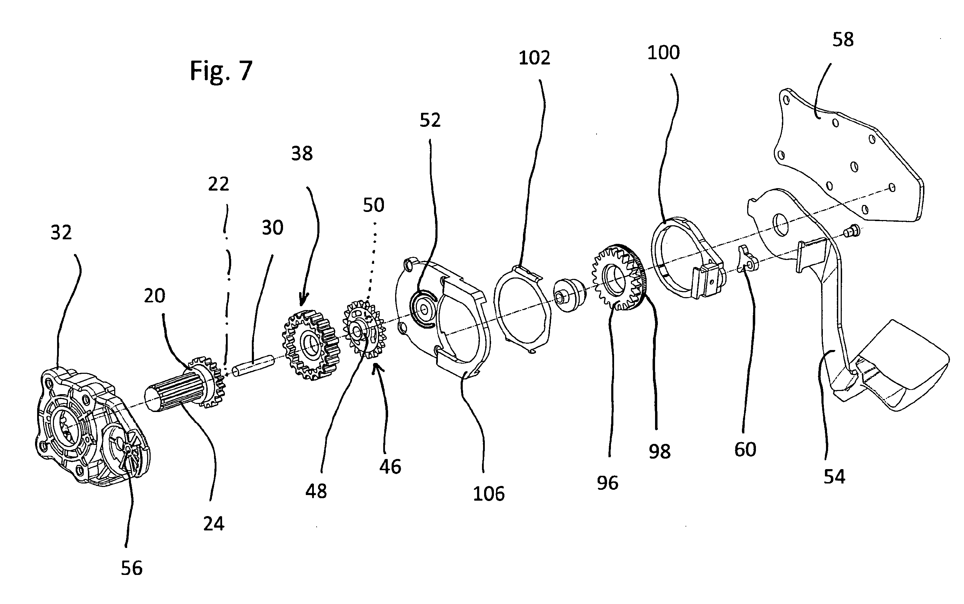

Das dritte Ausführungsbeispiel nach Figur 7 unterscheidet sich vom ersten Ausführungsbeispiel in Folgendem: Als Antriebsmittel wird wiederum ein Schrittschaltwerk eingesetzt. Dieses ist jedoch anders aufgebaut als im ersten Ausführungsbeispiel. Dem Rad des Stellrades 46, das wiederum eine Radialverzahnung aufweist, ist ein Vorlegerad 96 zugeordnet, das sich in der gleichen Ebene wie das Rad des Stellrads 46 befindet und mit ihm in Zahneingriff ist. Axial hinter diesem Vorlegerad 96 befindet sich ein Mitnehmerrad 98, das mit ihm drehverbunden ist und ebenfalls eine Außenverzahnung hat und. Diese Außenverzahnung ist wesentlich feinstufiger, mindestens um den Faktor 2, vorzugsweise mindestens um den Faktor 4 feiner als die Verzahnung des Vorlegerades 96. Es hat es um den angegebenen Faktor mehr Zähne. Mit dem Mitnehmerrad 98 kommt der nur eine Mitnehmer 60 in Eingriff.

Das Mitnehmerrad 98 ist Teil eines Schrittschaltwerks, welches entsprechend der Patentanmeldung WO 2012/065814 A1 aufgebaut ist.

Es hat einen Handhebel 54, der eine Abstützfläche für eine (in Fig. 7 nicht dargestellte) Feder 80 hat, die wie im ersten Ausführungsbeispiel als Schenkelfeder ausgeführt ist. Sie wird auch als Nulllagenfeder bezeichnet. Es ist ein Schlepphebel 100 vorgesehen, der gleichachsig zum Vorlegerad 96 ist und das Mitnehmerrad 98 umgreift. Er lagert den einstückig ausgebildeten Mitnehmer 60. Anstelle der Blattfeder 88 ist nun eine Haltefeder 102 vorgesehen, die mit Ausbuchtungen am Schlepphebel 100 zusammenwirkt. Durch das Vorlegerad 96 wird eine Bewegungsumkehr erreicht. Wird der Handhebel 54 angehoben, also gegen den Uhrzeigersinn gedreht, dreht sich das Vorlegerad 96 in gleichem Sinn, das Stellrad 46 im Gegensinn. Der Schlepphebel 100 weist eine Aussparung auf, in der sich der einzige Mitnehmer 60 befindet. Diese Aussparung umgreift das Stellrad 46 und wird durch das Stellrad 46 radial nach innen hin geschlossen. Der Handhebel 54 deckt die Aussparung in Axialrichtung ab.

Im Unterschied zu den bisher besprochenen Ausführungsbeispielen ist das Anschlagmittel aus Stift 50 und bogenförmiger Nut 52 nun anders ausgebildet. Der Stift 50 springt an der Seite des Stellrades 46 axial vor, die vom exzentrischen Ansatz 48 abgewandt ist. Die Nut 52, in die der Stift 50 eingreift, ist nun gehäusefest. Konkret ist sie an einem Zwischenstück 106 ausgebildet, das mit dem Gehäuseteil 32 und der Grundplatte 58 fest verbunden ist.

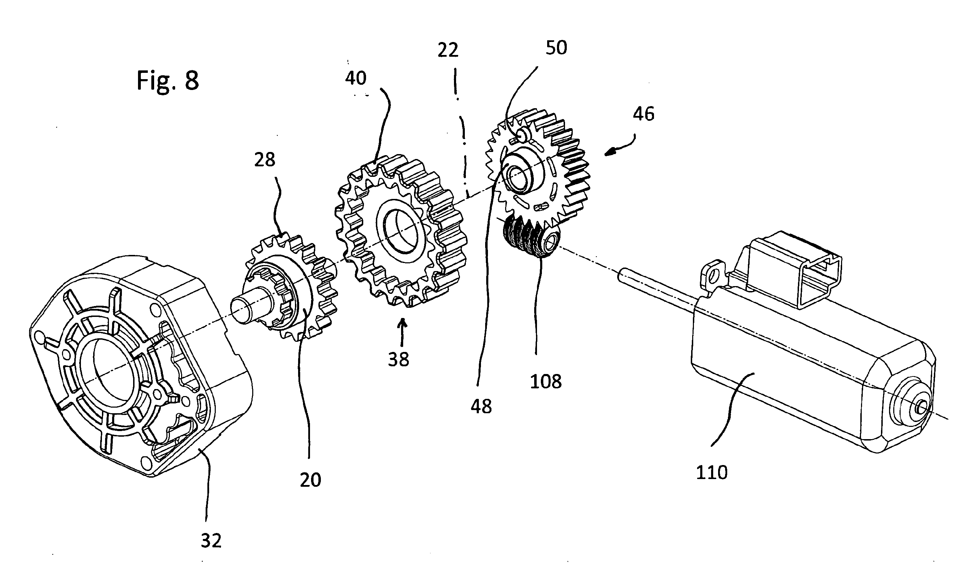

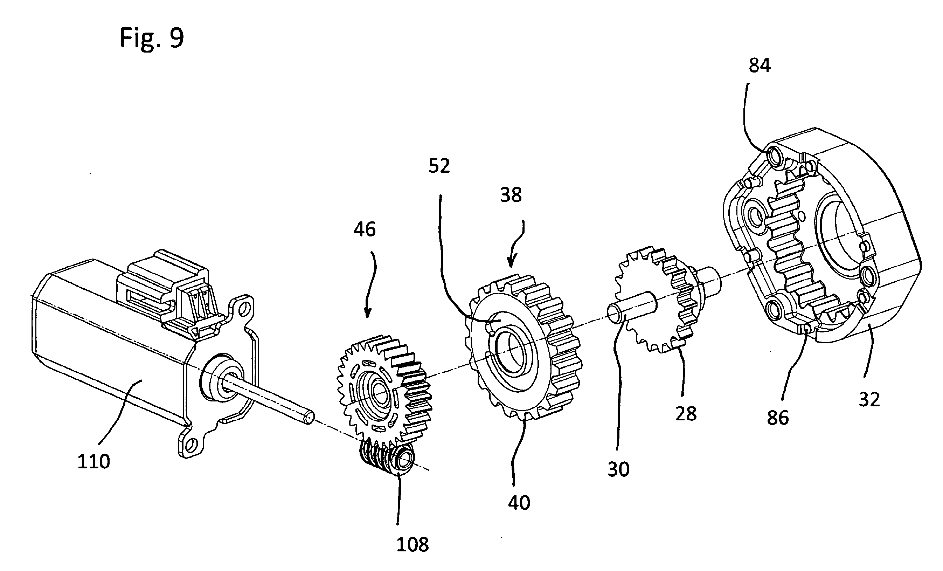

Im vierten Ausführungsbeispiel nach den Figuren 8 und 9 ist die dritte Alternative der Antriebseinheit einer Verstellvorrichtung verwirklicht. Der Unterschied zum zweiten Ausführungsbeispiel liegt in Folgendem: Die drei in Figur 4 links am Stellrad 46 befindlichen Teile sind ungeändert. Auch das Anschlagsmittel ist wie im zweiten Ausführungsbeispiel ausgeführt. Das Rad des Stellrades 46 hat nun keine Radialverzahnung, sondern ist als Schneckenrad ausgebildet. Es ist in Eingriff mit einer Schnecke 108, die von einem Elektromotor 110 angetrieben wird.

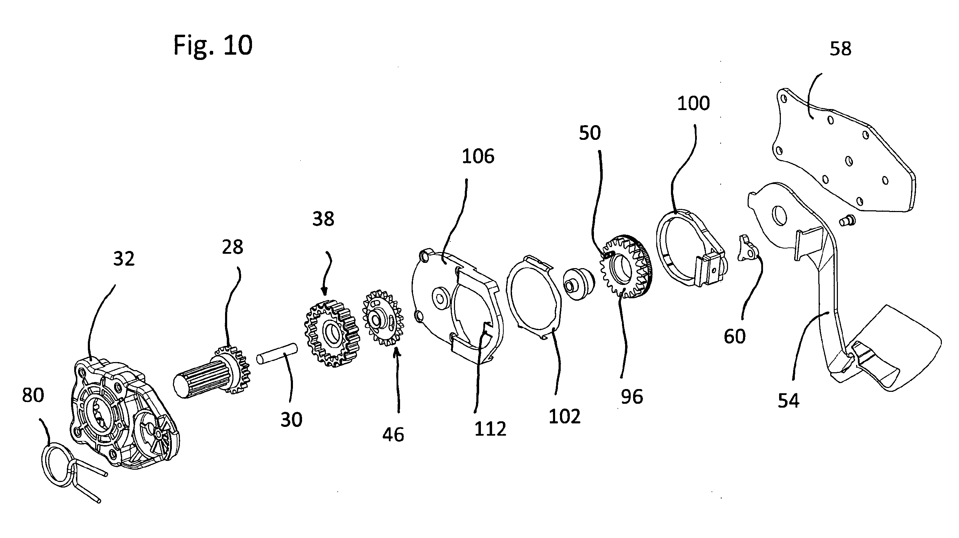

Das fünfte Ausführungsbeispiel nach Figur 10 entspricht dem dritten Ausführungsbeispiel nach Figur 7, jedoch ist nunmehr das Anschlagmittel geändert. Der Stift 50 springt nun am Vorlegerad 96 vor. Er wirkt mit einem Gegenanschlag 112 zusammen, der von einem Vorsprung gebildet wird, dieser Vorsprung ist Teil des Zwischenstücks 106. Das Anschlagmittel befindet sich somit zwischen der Antriebseinheit und dem Gehäuseteil 32. Demgemäß wird im fünften Ausführungsbeispiel das erste Anschlagmittel durch eine Fläche des Stifts 50 und eine Fläche des Vorsprungs 102 gebildet. Das zweite Anschlagmittel durch eine andere, diametral gegenüberliegende Fläche des Stifts 50 und die gegenüberliegende Fläche des Vorsprungs 102 gebildet

Die Bezeichnungen Exzenter und Taumel werden synonym verwendet. Eine Taumelstufe ist somit eine Exzenterstufe.

## Patentansprüche

1. Verstellvorrichtung für einen Drehgelenkbeschlag eines Kraftfahrzeugsitzes
- mit einem Gehäuseteil (32),
- mit einer Antriebseinheit,
- mit einer Getriebeeinheit, die der Antriebseinheit nachgeschaltet ist, von der Antriebseinheit angetrieben wird, mindestens ein selbsthemmendes Getriebe aufweist und eine Ausgangswelle (20) antreibt, wobei das selbsthemmende Getriebe ein Exzentergetriebe ist und ein Ringrad (38) und einen exzentrischen Ansatz (48) aufweist, und der exzentrische Ansatz (48) sich an einem Stellrad (46) um eine Bohrung herum erstreckt, die zentrisch zu einer Achse (22) des Drehgelenkbeschlages ist,
- mit einem um die Achse (22) des Drehgelenkbeschlages verstellbaren Element (26), das mit der Ausgangswelle (20) drehverbunden ist und in einem Winkelbereich ≤ 360° vorzugsweise ≤ 90° um die Achse (22) des Gelenkbeschlages verstellbar ist und
- mit mindestens einem Anschlagmittel, das den Schwenkbereich des verstellbaren Elements (26) mindestens in einer ersten Schwenkrichtung begrenzt, wobei das Anschlagmittel einen ersten Anschlag (50) und einen ersten Gegenanschlag (52, 112) aufweist, und der erste Gegenanschlag (52, 112) mit dem ersten Anschlag (50) in Kontakt ist, wenn sich das verstellbare Element (26) an einem ersten Ende seines Schwenkbereichs befindet,
**dadurch gekennzeichnet, dass** das Anschlagmittel zwischen dem Stellrad (46) und dem Ringrad (38) angeordnet ist, dass der erste Anschlag (50) an dem Stellrad (46) angeordnet ist, und dass der erste Gegenanschlag (52, 112) an dem Ringrad (38) angeordnet ist.

2. Verstellvorrichtung nach Anspruch 1, **dadurch gekennzeichnet, dass** das Anschlagmittel den Schwenkbereich des Elements (26) in beiden Schwenkrichtungen begrenzt, oder dass ein erstes Anschlagmittel für eine erste Schwenkrichtung und ein zweites Anschlagmittel für die zweite Schwenkrichtung vorgesehen sind.

3. Verstellvorrichtung nach einem der vorangegangenen Ansprüche, **dadurch gekennzeichnet, dass** die Antriebseinheit einen manuell betätigbares Handrad (90), einen manuell betätigbaren Handhebel (54) oder einen Elektromotor (110) aufweist.

4. Verstellvorrichtung nach einem der vorangegangenen Ansprüche, **dadurch gekennzeichnet, dass** die Antriebseinheit eine Über- oder eine Untersetzungsstufe aufweist.

## Claims

1. An adjustment device for a pivot joint fitting of a motor vehicle seat
- with a housing portion (32),
- with a drive unit,
- with a gear unit, which is downstream from the drive unit, is driven by the drive unit, has at least one self-locking gear and drives an output shaft (20), wherein the self-locking gear is an eccentric gear and comprises an annular gear wheel (38) and an eccentric protrusion (48), and the eccentric protrusion (48) extends on a control gear wheel (46) around a bore that is centric with respect to an axis (22) of the pivot joint fitting,
- with an element (26) that can be adjusted about the axis (22) of the pivot joint fitting and is rotationally connected to the output shaft (20) and is adjustable in an angle range ≤ 360°, preferably ≤ 90°, about the axis (22) of the joint fitting, and
- with at least one stop means that limits the pivoting range of the adjustable element (26) at least in one first pivoting direction, wherein the stop means has a first stop (50) and a first counter-stop (52, 112), and the first counter-stop (52, 112) is in contact with the first stop (50) when the adjustable element (26) is located at a first end of its pivoting range,
**characterised in that** the stop means is disposed between the control gear wheel (46) and the annular gear wheel (38), that the first stop (50) is disposed on the control gear wheel (46), and that the first counter-stop (52, 112) is disposed on the annular gear wheel (38).

2. The adjustment device according to claim 1, **characterised in that** the stop means limits the pivoting range of the element (26) in both pivoting directions, or that a first stop means is provided for a first pivoting direction and a second stop means for the second pivoting direction.

3. The adjustment device according to any one of the preceding claims, **characterised in that** the drive unit comprises a manually operable hand wheel (90), a manually operable hand lever (54) or an electric motor (110).

4. The adjustment device according to any one of the preceding claims, **characterised in that** the drive unit comprises a transmission or a reduction stage.

## Revendications

1. Dispositif de réglage pour une ferrure d'articulation pivotante d'un siège de véhicule automobile, comprenant
- une partie de boîtier (32),
- une unité d'entraînement,
- une unité d'engrenage qui est montée en aval de ladite unité d'entraînement, est entraînée par ladite unité d'entraînement, présente au moins un engrenage autobloquant et entraîne un arbre de sortie (20), ledit engrenage autobloquant étant un engrenage à excentrique et présentant une roue annulaire (38) et une saillie excentrique (48), et ladite saillie excentrique (48) s'étendant sur une roue de réglage (46) autour d'un perçage qui est centré par rapport à un axe (22) de la ferrure d'articulation pivotante,
- un élément (26) qui est réglable autour de l'axe (22) de la ferrure d'articulation pivotante et qui est relié en rotation audit arbre de sortie (20) et est réglable dans une plage angulaire ≤ 360°, de préférence ≤ 90°, autour de l'axe (22) de la ferrure d'articulation, et
- au moins un moyen de butée qui limite la plage de pivotement de l'élément réglable (26) au moins dans une première direction de pivotement, ledit moyen de butée présentant une première butée (50) et une première contre-butée (52, 112), et ladite première contre-butée (52, 112) étant en contact avec ladite première butée (50) lorsque ledit élément réglable (26) se trouve à une première extrémité de sa plage de pivotement,
**caractérisé par le fait que** ledit moyen de butée est disposé entre ladite roue de réglage (46) et ladite roue annulaire (38), que la première butée (50) est disposée sur la roue de réglage (46) et que la première contre-butée (52, 112) est disposée sur la roue annulaire (38).

2. Dispositif de réglage selon la revendication 1, **caractérisé par le fait que** le moyen de butée limite la plage de pivotement de l'élément (26) dans les deux directions de pivotement ou qu'un premier moyen de butée pour une première direction de pivotement et un deuxième moyen de butée pour la deuxième direction de pivotement sont prévus.

3. Dispositif de réglage selon l'une quelconque des revendications précédentes, **caractérisé par le fait que** ladite unité d'entraînement présente une roue à main (90) actionnable manuellement, un levier à main (54) actionnable manuellement ou un moteur électrique (110).

4. Dispositif de réglage selon l'une quelconque des revendications précédentes, **caractérisé par le fait que** ladite unité d'entraînement présente un étage multiplicateur ou un étage démultiplicateur.
